(19) Europäisches Patentamt
European Patent Office
Office européen des brevets

(11) **EP 1 074 128 B1**

(12) **FASCICULE DE BREVET EUROPEEN**

(45) Date de publication et mention
de la délivrance du brevet:
**25.02.2009 Bulletin 2009/09**

(21) Numéro de dépôt: **00907729.8**

(22) Date de dépôt: **25.02.2000**

(51) Int Cl.:
***H04L 25/03*** *(2006.01)*  ***H04L 27/26*** *(2006.01)*

(86) Numéro de dépôt international:
**PCT/FR2000/000477**

(87) Numéro de publication internationale:
**WO 2000/051301 (31.08.2000 Gazette 2000/35)**

(54) **RECEPTEUR DE SIGNAUX MULTIPORTEUSE A CORRECTION DE DEFAUTS D'EGALISATION PROVOQUES PAR LES DEPLACEMENTS DE LA FENETRE TRF**

MEHRTRÄGEREMPFÄNGER MIT KORREKTUR VON DURCH VERSCHIEBUNGEN DES FFT-FENSTERS VERURSACHTEN ENTZERRUNGSFEHLER

MULTICARRIER SIGNAL RECEIVER WITH CORRECTION OF EQUALIZATION FAULTS INDUCED BY THE TRF WINDOW DISPLACEMENTS

(84) Etats contractants désignés:
**DE FR GB IT**

(30) Priorité: **26.02.1999 FR 9902653**

(43) Date de publication de la demande:
**07.02.2001 Bulletin 2001/06**

(73) Titulaire: **STMicroelectronics S.A.**
**92120 Montrouge (FR)**

(72) Inventeur: **MEYER, Jacques**
**F-38950 Sain Martin Le Vinoux (FR)**

(74) Mandataire: **de Beaumont, Michel**
**Cabinet Michel de Beaumont**
**1, rue Champollion**
**38000 Grenoble (FR)**

(56) Documents cités:
**WO-A-95/19671**  **WO-A-97/41672**
**FR-A- 2 743 967**

**Description**

La présente invention concerne un démodulateur dit COFDM ("Coded Orthogonal Frequency Division Multiplex" ou multiplexage par division de fréquence orthogonal codé), et plus particulièrement un tel démodulateur utilisé pour des transmissions hertziennes.

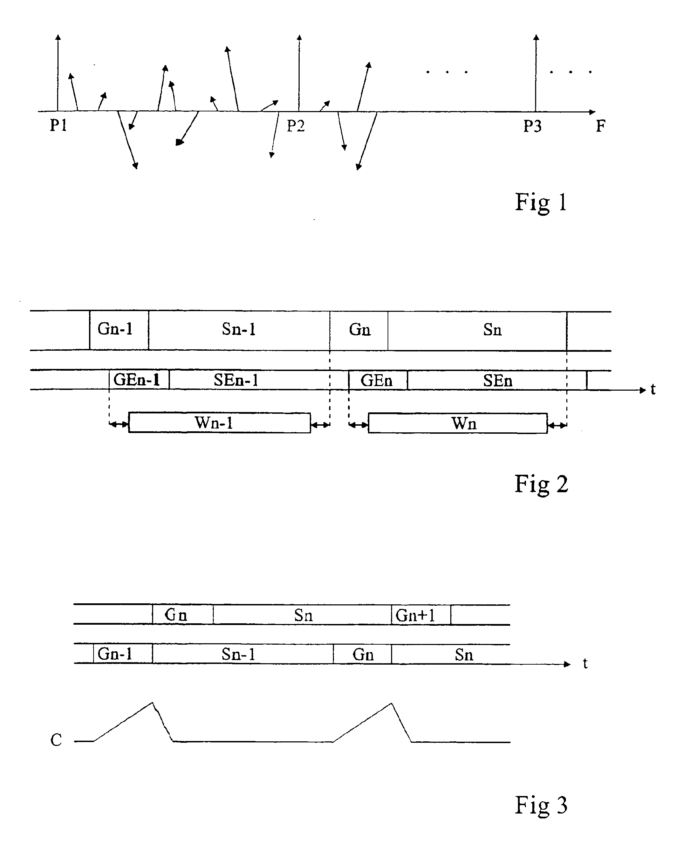

La figure 1 est destinée à illustrer le principe d'une modulation COFDM. Des paquets de données à émettre sont mises sous la forme de N coefficients complexes associés à N fréquences respectives. Le nombre N de fréquences est une puissance de 2, égale par exemple à 8192 (diffusion de télévision numérique). Chaque coefficient complexe correspond à un vecteur qui est illustré en figure 1 comme partant d'un axe des fréquences en un point indiquant la fréquence associée au coefficient.

L'ensemble de ces N coefficients est traité par transformée de Fourier rapide inverse (ou IFFT), ce qui produit un "symbole" constitué d'une somme de porteuses modulées, chaque porteuse ayant l'amplitude et la phase déterminées par le coefficient complexe associé. Le symbole ainsi généré est émis et un récepteur lui fait subir le traitement inverse, c'est-à-dire une transformée de Fourier rapide (FFT) pour reconstituer les coefficients complexes de départ.

Comme cela est représenté en figure 1, certains vecteurs P1, P2, P3... régulièrement répartis ont une valeur constante connue. Ces vecteurs, ou les porteuses correspondantes, sont appelés porteuses pilotes. Ils servent à refléter les distorsions subies par le signal transmis et à interpoler les corrections à effectuer sur les vecteurs inconnus situés entre les pilotes.

La figure 2 illustre une transmission de plusieurs symboles successifs Sn-1, Sn... Comme cela est représenté, chacun de ces symboles est précédé d'un intervalle de garde G qui n'est autre qu'une recopie d'une partie de la fin du symbole correspondant. Ces intervalles de garde servent à éviter des distorsions de modulation inter-symbole provoquées par un écho de la transmission au niveau du récepteur. La figure 2 représente également un écho SEn-1, GEn-1... du signal émis. Cet écho est retardé par rapport au signal principal d'une durée inférieure à celle d'un intervalle de garde G.

Chaque symbole S est normalement analysé par le circuit FFT du récepteur dans une fenêtre W de même longueur que le symbole. S'il n'y avait pas d'intervalle de garde, une fenêtre d'analyse W coïncidant avec un symbole du signal principal serait à cheval sur deux symboles du signal d'écho. Ceci provoquerait une erreur difficile à corriger dans la transformée FFT.

L'intervalle de garde G, pourvu qu'il soit supérieur au retard de l'écho, offre une marge de réglage de la fenêtre d'analyse W pour qu'elle ne coïncide qu'avec des portions appartenant au même symbole, aussi bien dans le signal principal que dans l'écho. Le fait qu'une fenêtre d'analyse soit à cheval sur un symbole et son intervalle de garde introduit seulement un déphasage qui est corrigé notamment grâce aux porteuses pilotes susmentionnées.

La figure 3 illustre une méthode utilisée dans un démodulateur COFDM classique, tel que décrit dans le brevet français 2 743 967, pour trouver, au début d'une réception, les débuts des symboles, ceci dans le but de régler la position des fenêtres d'analyse W. On effectue un produit de corrélation entre le signal reçu et ce même signal retardé d'un symbole. Ceci permet de détecter l'instant où chaque intervalle de garde du signal retardé coïncide avec une partie identique du signal reçu, à savoir la fin du symbole correspondant dans le signal reçu.

Le produit de corrélation C, initialement nul, se met à croître progressivement à partir du début de chaque intervalle de garde du signal retardé. La valeur maximale est atteinte à la fin de l'intervalle de garde du signal retardé, à la suite de quoi le produit de corrélation C se met à décroître pour atteindre la valeur nulle. En présence d'un signal d'écho, les pics de corrélation sont moins élevés et se décalent dans le sens de l'écho, de sorte qu'ils représentent assez bien où doivent débuter les fenêtres d'analyse.

Toutefois, le plus souvent les signaux sont bruités et il est difficile de déterminer avec une précision suffisante la position des pics de corrélation. Pour cela, le circuit décrit dans le brevet français susmentionné permet d'affiner la position, à l'initialisation du circuit, par l'analyse de la réponse impulsionnelle du canal. Bien entendu, il est possible que le signal reçu subisse des dérives de fréquence ou de phase en cours de fonctionnement, de sorte que la position des fenêtres doit être révisée régulièrement comme cela sera décrit ci-après.

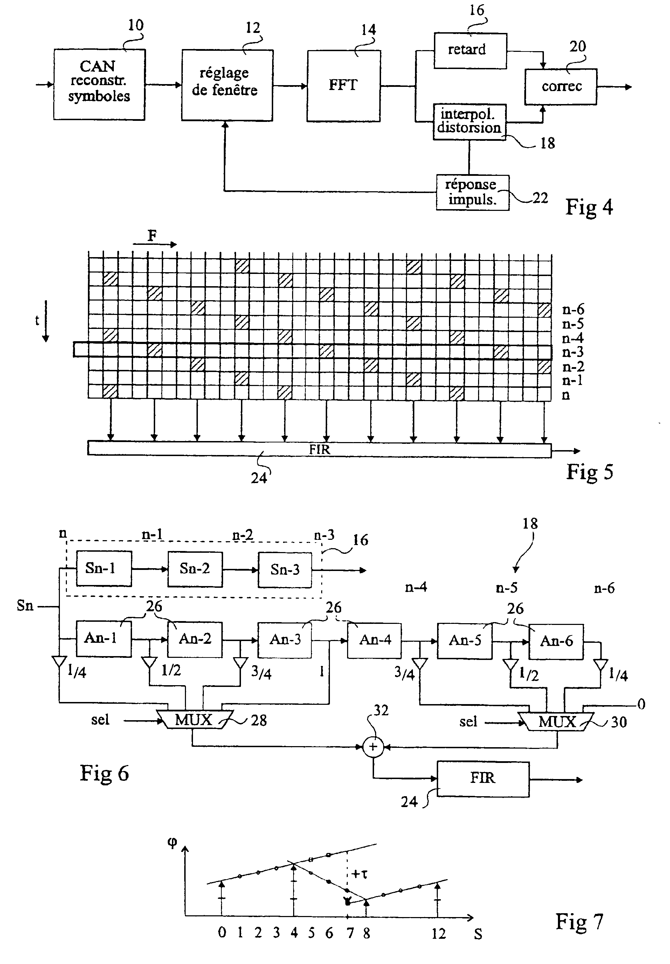

La figure 4 représente de manière très schématique l'architecture d'un démodulateur COFDM tel que décrit dans le brevet français susmentionné. Il s'agit d'un système de réception de signaux de télévision numérique diffusés par voie hertzienne. Dans une transmission hertzienne, les symboles sont véhiculés par une porteuse de fréquence élevée, laquelle fréquence est abaissée par un tuner non représenté. Un élément 10 de l'architecture de la figure 4 extrait les symboles de cette porteuse et les convertit en numérique. Un élément 12 détermine la position des fenêtres d'analyse comme cela a été décrit en relation avec la figure 3 et réajuste le cas échéant la position des fenêtres d'analyse. La transformée FFT est effectuée en 14 avec les fenêtres déterminées en 12. Les coefficients fournis par la transformée FFT sont mis en attente en 16 afin d'interpoler en 18 les distorsions subies par les coefficients. Les distorsions, qui sont des nombres complexes, sont utilisées pour corriger les coefficients en 20.

En 22 on calcule la réponse impulsionnelle du canal à partir des pilotes distordus tels que reçus. Cette réponse impulsionnelle permet de déterminer si la position des fenêtres d'analyse est correcte ou bien si elle doit être modifiée.

La position optimale de la fenêtre est obtenue lorsque l'énergie de la réponse impulsionnelle est maximale.

Comme on l'a précédemment indiqué, chaque symbole comporte des pilotes de caractéristiques identiques connues (ils sont généralement d'amplitude unitaire et de phase nulle ou à 180˚, selon une loi connue du récepteur). Les pilotes tels que reçus par le démodulateur reflètent les distorsions subies par les pilotes. La valeur de la distorsion est $A_p = P_p/E_p$, où $P_p$ est la valeur du pilote reçu de position p et $E_p$ la valeur du pilote émis correspondant. Une distorsion $A_p$ est couramment appelée "ancre". Ces ancres sont utilisées pour calculer par interpolation les distorsions, ci après notées $d_k$ ($k \neq p$), aux positions k dépourvues de pilotes.

La correction d'erreur en 20 consiste à calculer le rapport des coefficients tels que reçus et des distorsions interpolées respectives : $D_k = R_k/d_k$, où $D_k$ est la valeur corrigée et $R_k$ la valeur reçue.

Etant donné que les pilotes ne véhiculent pas de données, on cherche à limiter leur nombre. Par contre, plus le nombre de pilotes est faible, plus on effectue d'erreurs d'interpolation entre deux pilotes consécutifs. Pour améliorer cette situation, les pilotes sont décalés de plusieurs positions d'un symbole au suivant et on effectue une interpolation bidimensionnelle sur plusieurs symboles consécutifs. Dans l'exemple décrit ci-après, chaque symbole comporte un pilote toutes les douze positions et les pilotes sont décalés de trois positions d'un symbole au suivant.

La figure 5 illustre cette interpolation bidimensionnelle. Elle représente une matrice dont les rangées correspondent à des symboles consécutifs, le dernier symbole reçu étant à la dernière rangée. Les colonnes de la matrice correspondent aux positions ou fréquences successives des porteuses des symboles. Des carrés hachurés correspondent aux ancres reçues. On s'aperçoit que, grâce au décalage des pilotes d'un symbole au suivant, on retrouve des ancres rapprochées dans certaines colonnes (toutes les trois colonnes dans le présent exemple).

On commence par interpoler toutes les distorsions dans les colonnes contenant les ancres. Puis un filtre à réponse impulsionnelle finie 24 interpole les distorsions manquantes de chaque rangée.

Avec l'exemple susmentionné, on peut interpoler les distorsions d'un symbole n-3 au moment où l'on reçoit le symbole n. Par ailleurs, l'interpolation de certaines distorsions du symbole n-3 nécessitera des ancres de symboles antérieurs, jusqu'au symbole n-6. Cette méthode nécessite donc que l'on stocke complètement les symboles n-1 à n-3 et que l'on stocke également les ancres seules des symboles n-4 à n-6.

Une distorsion interpolée de position k dans un symbole n, s'exprime par :

$$d_{n,k} = (1 - \frac{s}{4}) \, A_{n-s,k} + \frac{s}{4} \, A_{n+4-s,k} \tag{1}$$

où les termes A sont les ancres reçues et
où s = (n modulo 4 - k/3 modulo 4) modulo 4.

A titre d'exemple, avec cette expression, la distorsion interpolée en troisième position du symbole n-3 à la figure 5 s'exprime par ¾ $A_{n-4}$ + ¼ $A_n$.

La figure 6 représente schématiquement un circuit d'interpolation de distorsion 18 mettant en oeuvre la méthode de la figure 5. Le circuit de retard 16 de la figure 4 stocke trois symboles consécutifs Sn-1, Sn-2, Sn-3 dans un registre à décalage. Les ancres reçues $A_{n-1}$ à $A_{n-6}$ de six symboles consécutifs nécessaires à interpoler les distorsions dans les colonnes sont stockées dans six registres à décalage 26 connectés en cascade. Le registre 16 et le premier registre 26 reçoivent le symbole courant Sn. Un multiplexeur 28 à quatre entrées reçoit sur une première entrée les ancres du symbole Sn, multipliées par un quart ; sur une deuxième entrée les ancres $A_{n-1}$ fournies par le premier registre 26, multipliées par un demi ; sur une troisième entrée les ancres $A_{n-2}$ fournies par le deuxième registre 26, multipliées par trois quarts ; et sur sa quatrième et dernière entrée les ancres $A_{n-3}$ fournies par le troisième registre 26.

Un multiplexeur 30 reçoit sur une première entrée les ancres $A_{n-4}$ fournies par le quatrième registre 26, multipliées par trois quarts ; sur une deuxième entrée les ancres $A_{n-5}$ fournies par le cinquième registre 26, multipliées par un demi ; sur une troisième entrée les ancres $A_{n-6}$ fournies par le sixième registre 26, multipliées par un quart ; et sur sa dernière entrée la valeur 0. En 32 la somme des sorties des multiplexeurs 28 et 30 est fournie au filtre 24. Les multiplexeurs 28 et 30 sont commandés par un même signal de sélection SEL qui sélectionne l'entrée adéquate des multiplexeurs en fonction de la position k de la distorsion à interpoler.

Comme on l'a précédemment indiqué, la position de la fenêtre d'analyse FFT est fixée une fois pour toutes lors d'une phase d'initialisation. Il est néanmoins prévu de vérifier régulièrement que la position de la fenêtre est bonne et de réajuster cette position le cas échéant. Toutefois, lorsque l'on modifie la position de la fenêtre d'analyse, on modifie corrélativement la phase de chacune des porteuses des symboles, et cette modification de phase se traduit par une distorsion qui doit être corrigée. Si la modification de phase survient pour un symbole courant n, les ancres de ce symbole courant n'auront pas la même référence de phase que les ancres des symboles précédents, d'où il résulte que l'on ne pourra pas interpoler les distorsions qui font intervenir les ancres du symbole n.

La figure 7 est destinée à illustrer plus en détail ce phénomène. Cette figure représente une évolution de phase d'une ancre de même position dans des symboles consécutifs numérotés à partir de zéro, ceci dans le cadre de l'exemple de la figure 5 où l'on trouve une ancre à la même position tous les quatre symboles.

On suppose que les symboles reçus prennent régulièrement de l'avance par rapport à la fenêtre d'analyse fixe, ce qui se traduit par une augmentation de la phase des ancres, comme cela est représenté pour les symboles 0, 4 et 8, 12. Les phases interpolées sont marquées par des cercles qui se trouvent sur des droites reliant les valeurs de phase des ancres.

Au septième symbole la fenêtre d'analyse est avancée d'un intervalle τ pour rattraper l'avance de phase des symboles. Il en résulte que la phase devrait évoluer comme cela est indiqué par des carrés, c'est-à-dire en continuant à croître régulièrement pour les symboles 5 et 6, en chutant brutalement pour le symbole 7, et en croissant de nouveau régulièrement. La chute de phase est perceptible la première fois dans l'ancre du symbole 8, et les erreurs interpolées pour les symboles 5 à 7, se trouvant sur la droite reliant les valeurs de phase des ancres des symboles 4 et 8, sont erronées. Il en résulte que l'on perd les symboles 5 à 7, laquelle perte est la plupart du temps perceptible, notamment sur un écran de télévision dans le cas où les symboles correspondent à des signaux vidéo.

Lorsque le récepteur et l'émetteur sont à des positions fixes, comme c'est la plupart des cas, un réajustement de fenêtre d'analyse survient rarement et de telles perturbations du signal peuvent être acceptables.

Par contre, on peut envisager d'utiliser un récepteur dans un véhicule en déplacement, tel qu'un train, auquel cas les réajustements de fenêtre devraient être fréquents, rendant inacceptables les perturbations que cela provoquerait.

Un objet de la présente invention est de prévoir un démodulateur COFDM qui permette de supprimer toute perturbation liée à un réajustement de la fenêtre d'analyse.

Pour atteindre cet objet, la présente invention prévoit un démodulateur COFDM comprenant un circuit de transformée de Fourier rapide analysant un signal reçu dans une fenêtre correspondant à un symbole, chaque symbole véhiculant plusieurs porteuses modulées en phase et en amplitude, dont certaines, décalées en fréquence de manière prédéterminée d'un symbole au suivant, constituent des pilotes ; un filtre bidimensionnel pour interpoler, à partir d'ancres correspondant aux pilotes tels que reçus de plusieurs symboles consécutifs, la distorsion subie par chaque porteuse ; et des moyens pour corriger le décalage de la fenêtre par rapport à une position optimale. Le démodulateur comprend des moyens pour corriger chaque distorsion en fonction de corrections de décalage de fenêtre survenues respectivement pour le symbole associé à la distorsion et pour les symboles associés aux ancres servant à interpoler la distorsion.

Selon un mode de réalisation de la présente invention, les moyens pour corriger le décalage de la fenêtre comprennent une boucle à verrouillage de phase synchronisée sur un signal de corrélation obtenu par un produit de corrélation entre le signal reçu et ce même signal retardé d'un symbole, chaque symbole étant précédé d'un intervalle de garde correspondant à une copie de la fin du symbole.

Selon un mode de réalisation de la présente invention, chaque distorsion est, dans le domaine fréquentiel après transformée de Fourier, une somme pondérée de deux ancres de même position dans un symbole précédent et dans un symbole suivant, auxquelles ancres on a ajouté des phases respectives correspondant aux décalages qu'a subis la fenêtre d'analyse pour lesdits symboles précédent et suivant, et auxquelles ancres on a retranché une phase correspondant au décalage qu'a subi la fenêtre d'analyse pour le symbole associé à la distorsion.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1, précédemment décrite, représente des porteuses modulées en phase et en amplitude dans un système de transmission COFDM ;
la figure 2, précédemment décrite, représente des signaux reçus par un démodulateur COFDM et des fenêtres d'analyse FFT des signaux ;
la figure 3, précédemment décrite, illustre une méthode de détection de début de symbole dans un démodulateur COFDM classique ;
la figure 4 précédemment décrite, représente schématiquement une architecture de démodulateur COFDM classique ;
la figure 5, précédemment décrite, illustre une méthode d'interpolation de distorsion bidimensionnelle ;
la figure 6, précédemment décrite, représente schématiquement un circuit permettant de mettre en oeuvre l'interpolation de la figure 5 ;
la figure 7, précédemment décrite, illustre un problème lié à un réajustement de fenêtre d'analyse FFT dans un démodulateur classique ;
la figure 8 représente schématiquement une architecture de démodulateur COFDM selon la présente invention ; et
la figure 9 représente plus en détail un élément du démodulateur de la figure 8.

Afin d'éviter des erreurs d'interpolation provoquées par une méthode d'interpolation bidimensionnelle lorsque l'on modifie la position d'une fenêtre d'analyse FFT par rapport au signal reçu, la présente invention prévoit de faire intervenir dans les calculs d'interpolation le déphasage provoqué, pour chaque fréquence, par la modification de position de la fenêtre d'analyse.

Dans l'exemple classique des figures 5 et 6, on rappelle qu'une distorsion interpolée $d_{n,k}$ s'exprimait par :

$$d_{n,k} = (1 - \frac{s}{4}) A_{n-s,k} + \frac{s}{4} A_{n+4-s,k} \qquad (1)$$

où les termes A sont les ancres reçues et

où s = (n modulo 4 - k/3 modulo 4) modulo 4.

Selon la présente invention, on calcule la distorsion $d_{n,k}$ selon la relation :

$$d_{n,k} = (1 - \frac{s}{4}) A_{n-s,k} e^{j2\pi f_k (w_{n-s} - w_n)} + \frac{s}{4} A_{n+4-s,k} e^{j2\pi f_k (w_{n+4-s} - w_n)}$$

où $f_k$ est la fréquence correspondant à la position k et où chaque terme w correspond à la position absolue exprimée en unités de temps de la fenêtre d'analyse qui a été utilisée pour le symbole indiqué par l'indice du terme w.

L'application de cette relation revient à appliquer la relation classique (1) en ayant préalablement ajouté aux deux ancres reçues A des phases respectives correspondant aux décalages subis par la fenêtre d'analyse pour les symboles associés aux deux ancres et retranché à la valeur ainsi obtenue la phase correspondant au décalage subi par la fenêtre d'analyse pour le symbole associé à la distorsion interpolée.

Si l'on applique cette relation à titre d'exemple à l'interpolation pour le symbole 6 de la figure 7, on a $w_{n-s} = w_4$ = 0, $w_n = w_6 = 0$ et $w_{n-s+4} = w_8 = \tau$. En d'autres termes, l'ancre du symbole 4 n'est pas modifiée tandis que l'ancre du symbole 8 est augmentée de $\tau$, ce qui ramène cette ancre en alignement avec les ancres reçues et interpolées des symboles 0 à 4 et permet de correctement interpoler l'ancre pour le symbole 6, indiquée par un carré.

Comme le vient de montrer cet exemple, l'invention peut être utilisée dans un démodulateur du type de la figure 4 où la position de la fenêtre d'analyse est classiquement fixée au départ et réajustée de temps en temps, comme cela a été décrit en relation avec la figure 3.

Toutefois, cette méthode classique de réglage de la fenêtre d'analyse est complexe et a jusqu'à maintenant requis l'utilisation d'un DSP ("Digital Signal Processor" ou processeur numérique de signal). Cette méthode a été utilisée car il était important d'obtenir une position de fenêtre précise dès le départ, afin d'éliminer toute nécessité de réglage ultérieur, ou du moins repousser aussi loin que possible le réglage ultérieur.

Par contre, selon la présente invention, comme chaque ancre est corrigée en fonction de la position courante de la fenêtre d'analyse, la fenêtre d'analyse peut en permanence être en déplacement. Ainsi, on peut envisager de régler la position de la fenêtre d'analyse à l'aide d'une boucle à verrouillage de phase (ou PLL) que l'on synchronise sur le signal de corrélation C décrit en relation avec la figure 3.

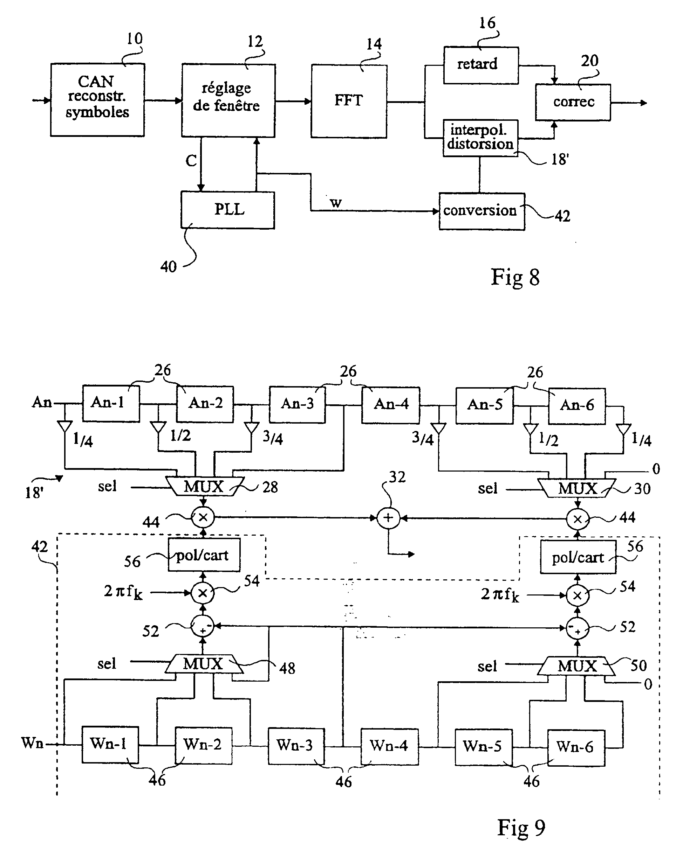

La figure 8 représente une architecture de démodulateur COFDM utilisant cette méthode. Cette architecture est similaire à celle de la figure 4, et des mêmes éléments sont désignés par des mêmes références. Le circuit d'interpolation de distorsion 18 de la figure 4 est ici remplacé par un circuit d'interpolation de distorsion 18' selon l'invention. Le circuit de réglage de position de fenêtre 12 est commandé en permanence par une PLL 40 qui se synchronise sur le signal de corrélation C décrit en relation avec la figure 3. De préférence, la PLL est numérique ; elle comporte alors un accumulateur qui indique la position absolue de la fenêtre d'analyse par rapport au symbole correspondant, laquelle position peut être exploitée directement en tant que valeur w. Les valeurs w consécutives sont converties en 42 pour pouvoir être utilisées par le circuit d'interpolation de distorsion 18'.

La figure 9 représente plus en détail les circuits d'interpolation 18' et de conversion 42. Le circuit 18' est similaire à celui de la figure 6, et des mêmes références désignent des mêmes éléments. Le circuit 18' diffère du circuit 18 par le fait que l'on a inséré un multiplieur 44 de nombres complexes à la sortie de chacun des multiplexeurs 28 et 30.

Le circuit 42 comprend six registres à décalage en cascade 46 dont le premier reçoit, pour chaque symbole, une valeur de décalage de fenêtre d'analyse w. Ainsi, les registres 46 stockent les valeurs w pour six symboles consécutifs et ceci en concordance avec les ancres A stockées dans les registres à décalage 26. Un multiplexeur 48 reçoit respectivement sur quatre entrées les entrées des premier à quatrième registres 46. Un multiplexeur 50 reçoit sur trois premières entrées les sorties respectives des trois derniers registres 46, et sur une quatrième entrée la valeur zéro. Les multiplexeurs 48 et 50 sont commandés par le même signal de sélection SEL que les multiplexeurs 28 et 30.

Chacun des multiplexeurs 48 et 50 est suivi d'un soustracteur 52 qui retranche à la sortie du multiplexeur respectif la sortie du troisième registre 46. Les sorties des soustracteurs 52 sont fournies sous forme de nombres complexes aux multiplieurs respectifs 44 après avoir été multipliées par $2nf_k$ en 54 et avoir subi une conversion polaire-cartésien en 56.

Lorsque la dernière entrée des multiplexeurs est sélectionnée, la valeur fournie par le circuit d'interpolation 18' est une ancre reçue qui ne doit pas être corrigée. Dans ce cas le soustracteur 52 associé au multiplexeur 48 fournit une valeur nulle correspondant à la valeur complexe 1 qui ne modifie pas l'ancre reçue fournie par le multiplexeur 28. Cette ancre reçue n'est pas non plus modifiée par l'additionneur 32 qui reçoit une valeur nulle du multiplieur 44 associé au multiplexeur 30.

Un démodulateur COFDM classique comprend généralement un multiplieur par un nombre complexe du type $e^{j2\pi f_k T}$ à la sortie du circuit FFT, où T est la moitié de la durée des intervalles de garde G. En effet, on considère que les fenêtres d'analyse commencent normalement aux centres des intervalles de garde plutôt qu'aux débuts des symboles, et cette multiplication compense le décalage résultant. Ce multiplieur pourra avantageusement être utilisé en temps partagé pour effectuer les multiplications requises par l'invention.

**Revendications**

1. Démodulateur COFDM comprenant :

 • un circuit de transformée de Fourier rapide (14) analysant un signal reçu dans une fenêtre correspondant à un symbole, chaque symbole véhiculant plusieurs porteuses modulées en phase et en amplitude, dont certaines, décalées en fréquence de manière prédéterminée d'un symbole au suivant, constituent des pilotes ;
 • un filtre bidimensionnel (18) pour interpoler, à partir des valeurs de distorsion correspondant aux pilotes tels que reçus de plusieurs symboles consécutifs (S), la distorsion subie par chaque porteuse ; et
 • des moyens (12) pour corriger le décalage de la fenêtre par rapport à une position optimale ;

 **caractérisé en ce qu'**il comprend des moyens (42) pour corriger chaque distorsion en fonction de corrections de décalage de fenêtre survenues respectivement pour le symbole associé à la distorsion et pour les symboles associés aux valeurs de distorsion servant à interpoler la distorsion.

2. Démodulateur selon la revendication 1, **caractérisé en ce que** les moyens pour corriger le décalage de la fenêtre comprennent une boucle à verrouillage de phase (40) synchronisée sur un signal de corrélation (C) obtenu par un produit de corrélation entre le signal reçu et ce même signal retardé d'un symbole, chaque symbole étant précédé d'un intervalle de garde (G) correspondant à une copie de la fin du symbole.

3. Démodulateur selon la revendication 1, **caractérisé en ce que** chaque distorsion est, dans le domaine fréquentiel après transformée de Fourier, une somme pondérée de deux valeurs de distorsion correspondant à deux pilotes de même fréquence dans un symbole précédent et dans un symbole suivant, auxquelles valeurs de distorsion on a ajouté des phases respectives correspondant aux décalages qu'a subis la fenêtre d'analyse pour lesdits symboles précédent et suivant, et auxquelles valeurs de distorsion on a retranché une phase correspondant au décalage qu'a subi la fenêtre d'analyse pour le symbole associé à la distorsion.

**Claims**

1. A COFDM demodulator including:

 a fast Fourier transform circuit (14) analyzing a received signal in a window corresponding to one symbol, each symbol carrying several phase and amplitude modulated carriers, some of which, shifted in frequency in a predetermined way from one symbol to the next one, form pilots;
 a bidimensional filter (18) for interpolating, from distortion values corresponding to the pilots such as received from several consecutive symbols (S), the distortion undergone by each carrier; and
 means (12) for correcting the window shifting with respect to an optimal position;
 **characterized in that** it comprises means (42) for correcting each distortion according to window shifting corrections performed respectively for the symbol associated with the distortion and for the symbols associated with the distortion values used to interpolate the distortion.

2. The demodulator of claim 1, **characterized in that** the means for correcting the window shifting include a phase-locked loop (40) synchronized on a correlation signal (C) obtained by a correlation product between the received signal and this same signal delayed by one symbol, each symbol being preceded by a guard interval (G) corresponding to a copy of the end of the symbol.

3. The demodulator of claim 1, **characterized in that** each distortion is, in the frequency field after Fourier transform, a weighted sum of two distortion values corresponding to two pilots of the same frequency in a preceding symbol and in a following symbol, to which distortion values have been added respective phases corresponding to the shiftings undergone by the analysis window for the preceding and following symbols, and to which distortion values has been subtracted a phase corresponding to the shifting undergone by the analysis window for the symbol associated with the distortion.

**Patentansprüche**

1. Ein COFDM Demodulator, der Folgendes beinhaltet:

eine schnelle Fourier-Transformationsschaltung (14), die ein empfangenes Signal in einem Fenster, das einem Symbol entspricht, analysiert, wobei jedes Symbol mehrere phasen- und amplitudenmodulierte Träger befördert, von denen einige, die auf eine vorherbestimmte Weise von einem Symbol zu dem nächsten Symbol frequenzverschoben sind, Piloten bzw. Pilottöne bilden;
ein zwei-dimenisonales Filter (18) zum Interpolieren von Verzerrungswerten, die den Piloten entsprechen, sowie sie von mehreren aufeinanderfolgenden Symbolen (S) empfangen worden sind, wobei der Verzerrung jeder Träger ausgesetzt ist; und
Mittel (12) zum Korrigieren der Fensterverschiebung mit Bezug auf eine optimale Position;
**dadurch gekennzeichnet, dass** er Mittel (42) aufweist zum Korrigieren jeder Verzerrung gemäß Fensterverschiebungskorrekturen, die entsprechend für das Symbol durchgeführt werden, das mit der Verzerrung assoziiert ist und für die Symbole, die mit den Verzerrungswerten assoziiert sind, die zum Interpolieren der Verzerrung genutzt worden sind.

2. Demodulator nach Anspruch 1, **dadurch gekennzeichnet, dass** die Mittel zum Korrigieren der Fensterverschiebung eine phaseneingerastete Schleife (phase-locked loop) (40) beinhalten, die mit einem Korrelationssignal (C) synchronisiert ist, das erlangt wird durch ein Korrelationsprodukt zwischen dem empfangenen Signal und des gleichen Signals, verzögert um ein Symbol, wobei jedem Symbol ein Schutzintervall (G) vorangeht, das einer Kopie von dem Ende von dem Symbol entspricht.

3. Demodulator nach Anspruch 1, **dadurch gekennzeichnet, dass** jede Verzerrung in dem Frequenzfeld nach der Fourier-Transformation, eine gewichtete Summe von zwei Verzerrungswerten ist, die zwei Piloten von der gleichen Frequenz in einem vorhergehenden Symbol und in einem folgenden Symbol entsprechen, zu deren Verzerrungswerten entsprechende Phasen hinzuaddiert worden sind, die den Verschiebungen entsprechen, denen das Analysefenster für die vorhergehenden und folgenden Symbole ausgesetzt worden ist, und von deren Verzerrungswerten eine Phase subtrahiert worden ist, die der Verschiebung entspricht, der das Analysefenster für das mit der Verzerrung assoziierte Symbol ausgesetzt worden ist.

Fig 1

Fig 2

Fig 3

CAN reconstr. symboles **10**

réglage de fenêtre **12**

FFT **14**

retard **16**

correc **20**

interpol. distorsion **18**

réponse impuls. **22**

**Fig 4**

F

t

n-6
n-5
n-4
n-3
n-2
n-1
n

FIR

**24**

**Fig 5**

n — n-1 — n-2 — n-3 **16**

Sn-1 → Sn-2 → Sn-3

Sn

**18**

n-4        n-5        n-6

**26**        **26**        **26**

An-1 → An-2 → An-3 → An-4 → An-5 → An-6

1/4   1/2   3/4   l        3/4   1/2   1/4

sel → MUX **28**        sel → MUX **30**   0

**32** +

FIR **24**

**Fig 6**

φ

+τ

0 1 2 3 4 5 6 7 8        12   S

**Fig 7**

Fig 8

Fig 9

**RÉFÉRENCES CITÉES DANS LA DESCRIPTION**

**Documents brevets cités dans la description**

- FR 2743967